# EUROPÄISCHE PATENTSCHRIFT

(11) **EP 2 923 985 B1**
(45) Veröffentlichungstag und Bekanntmachung des Hinweises auf die Patenterteilung: **01.08.2018**
(21) Anmeldenummer: 15160306.5
(22) Anmeldetag: 23.03.2015
(51) Int. Cl.: B65H 51/00

(54) **Faserzuführvorrichtung**
FIBRE FEED DEVICE
DISPOSITIF D'ALIMENTATION EN FIBRES

(30) Priorität: 24.03.2014 DE 202014101350 U
(43) Veröffentlichungstag der Anmeldung: 30.09.2015
(73) Patentinhaber: Deutsches Zentrum für Luft- und Raumfahrt e.V., 51147 Köln (DE)
(72) Erfinder: Delisle, Dominik, 21682 Stade (DE); Stoffers, Niels, 22419 Hamburg (DE); Krombholz, Christian, 21614 Buxtehude (DE)
(74) Vertreter: Aisch, Sebastian

(56) Entgegenhaltungen:
- WO-A1-2008/101658
- FR-A1- 2 912 953

## Beschreibung

Die Erfindung betrifft eine Faserzuführvorrichtung zum Zuführen von Faserendlosmaterial von einem Fasermaterialvorratsspeicher zur einen von dem Fasermaterialvorratsspeicher entfernt im Raum befindlichen Verarbeitungseinheit, wobei das Faserendlosmaterial ein zumindest teilweise elektrisch leitfähiges Material enthält.

Bauteile aus einem Faserverbundwerkstoff, sogenannte Faserverbundbauteile, sind aus der Luft- und Raumfahrt heute nicht mehr wegzudenken. Aber auch im Automobilbereich findet die Verwendung derartiger Werkstoffe immer mehr Zuspruch. Insbesondere kritische Strukturelemente werden aufgrund der hohen gewichtsspezifischen Festigkeit und Steifigkeit bei minimalem Gewicht aus faserverstärkten Kunststoffen gefertigt. Durch die aus der Faserorientierung resultierenden anisotropen Eigenschaften der Faserverbundwerkstoffe können Bauteile an lokale Belastungen angepasst werden und ermöglichen so eine optimale Materialausnutzung im Sinne des Leichtbaus.

Aufgrund der steigenden Stückzahlen bei der Produktion sowie auch steigenden Anforderungen an Effektivität und Genauigkeit wird versucht, den Herstellungsprozess von faserverstärkten Bauteilen zunehmend zu automatisieren. So ist beispielsweise aus der DE 10 2010 015 027 B1 eine Faserlegeanlage zur Herstellung von Großbauteilen bekannt, bei der Roboter zum Ablegen von Fasern auf einen um das Werkzeug herumlaufenden Schienensystem geführt werden. Die Roboter können dabei das Fasermaterial, das in der Regel in Form eines Quasiendlosmaterials bereitgestellt wird, auf dem Formwerkzeug ablegen. Diese Form der Herstellung von Großbauteilen wird unter anderem auch Automated Fiber Placement (AFP) genannt.

Als Fasern bzw. Fasermaterial kommen insbesondere Fasermaterialien mit einem flachen Profilquerschnitt wie beispielsweise Towpreg, Slittape, Faserstränge, Rovings sowie Gelege- und Gewebestränge zum Einsatz. Das Fasermaterial muss dabei von einem feststehenden Fasermagazin bzw. Fasermaterialvorratsspeicher zudem im Raum frei bewegbaren Ablegekopf gefördert bzw. transportiert werden, wodurch sich einige Probleme bei der Bereitstellung von Fasermaterial an dem Ablegekopf während des Ablegeprozesses ergeben. Denn aufgrund der freien Bewegbarkeit des Ablegekopfes im Raum verändert sich während des Ablegens des Fasermaterials ständig die Distanz zwischen dem feststehenden Fasermaterialvorratsspeicher und dem Ablegekopf, sodass hier ungewollt verschiedene Kräfte auf die zu transportierenden Fasermaterialien wirken.

Aus der EP 2 117 818 B1 ist beispielsweise eine Faserlegeeinheit mit einem Faserspeicher, einem Roboter und einem Ablegekopf bekannt, bei dem das Fasermaterial mit Hilfe eines flexiblen Rohrleitungssystems dem Ablegekopf zugeführt wird. Die Fasermaterialien, die in dem Fasermagazin als Faserendlosmaterial bzw. Quasiendlosmaterial vorliegen, werden innerhalb des flexiblen Rohrleitungssystems transportiert, wobei der Innenraum des Rohrleitungssystems mittels eines Fluides druckbeaufschlagbar ist. Durch das Beaufschlagen des Innenraumes des Rohrleitungssystems mit einem Fluid soll das darin geführte Fasermaterial von den Innenwänden des Rohrleitungssystems weggedrückt werden, um so zum einen den Transport des Fasermaterials zu gewährleisten und zum anderen sicherzustellen, dass das Fasermaterial während des Transportes nicht beschädigt wird. Allerdings ergibt sich durch das geschlossene Röhrensystem der Nachteil, dass die Fasern bzw. Fasermaterialien bei schnellen Relativbewegungen des Ablegekopfes gegenüber dem Fasermagazin bzw. bei starkem Knick oder Drehbewegungen trotz der Beaufschlagung des Innenraumes mit einem Fluid an den Rohrinnenwänden reiben, was zu Beschädigungen der Fasern führen kann.

Aus der WO 2008/101658 A1 ist ein Verfahren zur verdrillungsfreien Zwischenspeicherung des freien Endes eines von einer Trägerrolle mit im wesentlichen konstanter Geschwindigkeit tangential abgewickelten Fadens in einem mit einem vorgegebenen Magnetfeld beaufschlagten Fadenspeicherraum bekannt, wobei der Faden elektrisch leitend ist und so zwischen zwei Kontaktkufen mit einem Stromfluss beaufschlagt wird, dass das dabei um den Faden erzeugte Magnetfeld in dem vorgegebenen externen Magnetfeld einen Garndurchhang zur Fadenzwischenspeicherung bewirkt.

Aus der nachveröffentlichten DE 10 2013 108 569.5 ist eine Faserzuführvorrichtung zum Zuführen von Faserendlosmaterial bekannt, bei dem die Faserzuführvorrichtung aus einer Mehrzahl von Segmenten einer Gliederkette besteht, wobei jedes Segment mit dem anderen Segment über eine Spanneinrichtung verbunden ist, um so die einzelnen Segmente immer auf Spannung zu halten. Hierdurch sollen Materialüberschüsse bei der Bewegung des Ablegekopfes gegenüber dem Fasermagazin sowie ungewollte Zugkräfte vermieden werden.

Vor diesem Hintergrund ist es Aufgabe der vorliegenden Erfindung eine verbesserte Faserzuführvorrichtung zum Zuführen von Faserendlosmaterial zu einer frei bewegbaren Verarbeitungseinheit anzugeben, mit der prozesssicher verhindert werden kann, dass aufgrund des Materialtransportes von dem Materialspeicher zu der Verarbeitungseinheit Beschädigungen an dem Fasermaterial entstehen.

Die Aufgabe wird erfindungsgemäß mit der Faserzuführvorrichtung gemäß Schutzanspruch 1 gelöst.

Demnach wird eine Faserzuführvorrichtung zum Zuführen von Faserendlosmaterial von einem Fasermaterialvorratsspeicher zu einer von dem Fasermaterialvorratsspeicher entfernt im Raum befindlichen Verarbeitungseinheit vorgeschlagen, wobei das Faserendlosmaterial ein zumindest teilweise elektrisch leitfähiges Material enthält. Die Faserzuführvorrichtung weist ein schlauchförmiges Faserleitungssystem auf, das zumindest eine Faserleitung hat, die einen Innendurchgang zur Aufnahme des Faserendlosmaterials aufweist und die mit dem Fasermaterialvorratsspeicher einerseits und der Verarbeitungseinheit andererseits verbindbar ist, um das Faserendlosmaterial von dem Fasermaterialvorratsspeicher zu der Verarbeitungseinheit in einer Förderrichtung zu befördern und so das Faserendlosmaterial der Verarbeitungseinheit, beispielsweise einem Faserlegekopf, zuzuführen. Die Faserleitung des schlauchförmigen Faserleitungssystems ist dabei eine Faserleitung mit beliebigem Querschnitt, insbesondere ein länglicher Hohlkörper mit beliebigem Querschnitt, der an seinen beiden gegenüberliegenden Enden offen ist, um mit dem Fasermaterialvorratsspeicher einerseits und der Verarbeitungseinheit andererseits verbunden zu werden.

Die Faserleitung des schlauchförmigen Faserleitungssystems kann dabei vollständig geschlossen sein, so dass ein Zugriff auf das Faserendlosmaterial im Innendurchgang verhindert wird. Denkbar ist allerdings auch, dass die Faserleitung eine offene Struktur bzw. Kinematik hat, wodurch die Faserleitung flexibler gestaltet werden kann. Die Faserleitung kann eine Rohrleitung sein, die offene oder geschlossene Seitenflächen aufweist.

Erfindungsgemäß ist nun einen elektrische Kontakteinrichtung vorgesehen, die zum Kontaktieren des Faserendlosmaterials mit einer elektrischen Energiequelle derart ausgebildet ist, dass ein Stromfluss in dem Faserendlosmaterial bewirkt wird. Der Stromfluss wird dabei so bewirkt, dass im Wesentlichen parallel zu der Förderrichtung durch das Faserendlosmaterial bewirkt wird, wenn das Faserendlosmaterial im Innendurchgang der Faserleitung befördert wird. Da die Fasern eines solchen Faserendlosmaterials in der Regel eine Orientierung aufweisen, die der Förderrichtung entspricht, kann durch Kontaktieren des Faserendlosmaterials mit einer elektrischen Kontakteinrichtung erreicht werden, dass ein Stromfluss durch das Faserendlosmaterial bewirkt wird.

Hierneben ist erfindungsgemäß weiterhin eine Magnetvorrichtung vorgesehen, die zum Erzeugen eines Magnetfeldes in den Innendurchgang der Faserleitung ausgebildet ist. Eine solche Magnetvorrichtung kann beispielsweise einen oder mehrere Magnete, beispielsweise Elektromagnete oder Permanentmagnete, aufweisen, um ein derartiges Magnetfeld in den Innendurchgang der Faserleitung zu erzeugen. Das stromdurchflossene Faserendlosmaterial wirkt nun mit dem Magnetfeld derart zusammen, dass eine Kraft auf das Faserendlosmaterial im Innendurchgang der Faserleitung während der Förderung wirkt, sodass das in dem Innendurchgang der Faserleitung befindliche Faserendlosmaterial von den Innenwänden der Faserleitung weggedrückt wird und so nahezu berührungslos durch die Faserleitung transportiert werden kann.

Dabei wird die Tatsache ausgenutzt, dass auf einen stromdurchflossenen Leiter, in diesem Fall das Faserendlosmaterial mit seinen elektrisch leitfähigen Fasern, im Magnetfeld eine Kraft auf den Leiter ausgeübt wird, was gemein hin auch als Lorentzkraft bezeichnet wird. Die Erfinder haben erkannt, dass dieser physikalische Effekt beim Transport von Faserendlosmaterial in einem schlauchförmigen Faserleitungssystem genutzt werden kann, um zu verhindern, dass das Faserendlosmaterial während der Förderung durch die Faserleitung mit den Innenwänden in Berührung kommt und so beschädigt wird. Das Faserendlosmaterial wird aufgrund der bewirkten Lorentzkraft von den Innenwänden der Faserleitung weggedrückt und so berührungslos durch die Faserleitung transportiert, und zwar erfindungsgemäß auch dann, wenn sich die Entfernung zwischen feststehenden Fasermaterialvorratsspeicher und der frei im Raum bewegbaren Verarbeitungseinheit ändert, was zu Zug- und Stauchbewegungen an dem schlauchförmigen Faserleitungssystem führt. Auch bei diesen Bewegungen haben die Erfinder erkannt, dass das Faserendlosmaterial sicher durch das schlauchförmige Faserleitungssystem transportiert werden kann.

Hierbei wird der Vorteil erreicht, dass die Anzahl der Berührungspunkte zwischen Fasermaterial und der Faserleitung minimiert oder vollständig reduziert werden können. Lassen sich Berührungspunkte nicht ausschließen, da große Relativbewegungen zwischen Fasermaterialvorratsspeicher und Verarbeitungseinheit durchgeführt werden, welche insbesondere bei stark gekrümmten Faserleitungen nicht auszuschließen sind, werden die Reibungskräfte durch die Einwirkung der Lorentzkraft deutlich reduziert.

Da die elektromagnetischen Kräfte sehr gleichmäßig auf das Fasermaterial einwirken, wird zudem die Gefahr der Beschädigung des Materials gegenüber dem druckbeaufschlagten Schlauchsystemen reduziert.

In einer Ausführungsform weist die Magnetvorrichtung eine oder mehrere Magnete auf, die in oder an der Faserleitung angeordnet sind. So können die Magnete beispielsweise integraler Bestandteil der Faserleitung sein und in der Mantelfläche der Faserleitung des schlauchförmigen Faserleitungssystems angeordnet sein.

Besonders vorteilhaft ist es nun, wenn die Faserzuführvorrichtung derart ausgebildet ist, dass durch das Zusammenwirken des stromdurchflossenen Faserendlosmaterials mit dem Magnetfeld die auf das Faserendlosmaterial wirkende Kraft ein berührungsloses förderndes Faserendlosmaterials in den Innendurchgang der Faserleitung bewirkt. Berührungspunkte mit der Innenwand des Faserleitung können so vermieden werden, was Beschädigungen des Faserendlosmaterials ausschließt. Dies kann beispielsweise derart geschehen, dass die Anzahl und Positionen der Magnete der Magnetvorrichtung sowie die Feldstärke der Magnete und die Höhe des Stromflusses so gewählt wird, dass sie in Bezug auf das zu transportierende Material eine entsprechende berührungslose Förderung durch den Innendurchgang der Faserleitung bewirkt wird.

Ganz besonders vorteilhaft ist es nun, wenn die Faserzuführvorrichtung derart ausgebildet ist, dass durch das Zusammenwirken des stromdurchflossenen Faserendlosmaterials mit dem Magnetfeld die auf das Faserendlosmaterial wirkende Kraft das Faserendlosmaterial im Wesentlichen mittig in Bezug auf den Querschnitt der Faserleitung während der Förderung hält, sodass bei Kipp, Knick-, Knick- und Torsionsbewegungen der Faserleitung aufgrund einer Bewegung der Verarbeitungseinheit in Bezug auf den Fasermaterialvorratsspeicher eine Berührung des Faserendlosmaterials mit einer Innenwand der Faserleitung reduziert oder vermieden wird.

Vorteilhafterweise ist die Faserzuführvorrichtung so ausgebildet, dass die auf das Faserendlosmaterial wirkende Kraft in eine Richtung entgegengesetzt zumindest einer Innenwand des Innendurchgangs der Faserleitung wirkt. Vorteilhafterweise ist die Faserzuführvorrichtung so ausgebildet, dass die Kraft entgegensetzt einer ersten Innenwand und entgegensetzt einer zweiten Innenwand wirkt, wobei die erste und die zweite Innenwand gegenüberliegende Innenwände der Faserleitung sind.

Darüber hinaus ist es vorteilhaft, wenn die Faserleitung eine flexible Faserleitung, insbesondere Rohrleitung, darstellt, um die Relativbewegung zwischen Verarbeitungseinheit einerseits und feststehendem Fasermaterialvorratsspeicher andererseits durch eine Formveränderung auszugleichen. Die flexible Faserleitung kann dabei beispielsweise auch in eine oder mehrere Segmente unterteilt sein und an der Robotereinheit feststehende Anlegpunkte aufweisen.

Im Übrigen wird die Aufgabe auch mit einer Faserlegevorrichtung gemäß Schutzanspruch 6 gelöst, wobei die Faserlegevorrichtung zum Legen von Fasermaterial auf ein Werkzeug zur Herstellung eines Faserverbundbauteils ausgebildet ist. Die Faserlegevorrichtung weist einen Fasermaterialvorratsspeicher, einen Roboter, einen an dem Roboter zur freien Bewegung angeordneten Faserlegekopf zum Legen von Fasermaterial sowie eine Faserzuführvorrichtung, so wie vorstehend beschrieben.

Die Erfindung wird anhand der beigefügten Figuren beispielhaft erläutert. Es zeigen:
- Figur 1: schematische Darstellung einer Faserlegevorrichtung;
- Figur 2: schematische Darstellung durch einen Querschnitt der erfindungsgemäßen Faserzuführvorrichtung.

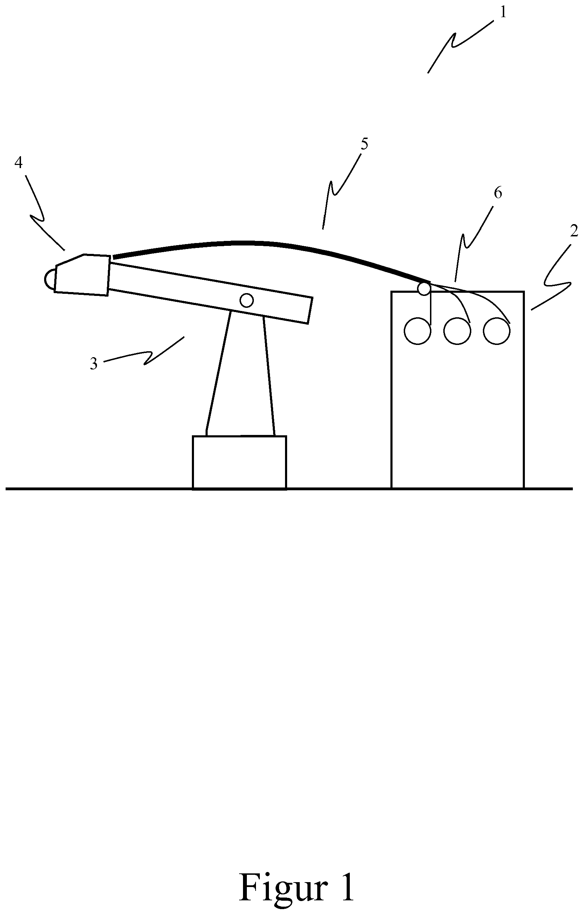

Figur 1 zeigt schematisch eine Faserlegevorrichtung 1, die einen feststehenden Fasermaterialvorratsspeicher 2, einen Roboter 3 sowie einen an dem Roboter 3 als Enddefektor angeordneten Faserlegekopf 4 aufweist. Zwischen dem feststehenden Fasermaterialvorratsspeicher 2 und dem frei bewegbaren Faserlegekopf 4 ist eine schlauchartige bzw. rohrartige Faserzuführvorrichtung 5 vorgesehen, die in ihrem Inneren hohl ausgeführt ist, sodass das in dem Fasermaterialvorratsspeicher 2 vorgehaltene Fasermaterial 6 hindurch zu dem Faserablegekopf 4 gefördert werden kann. Das so dem Faserlegekopf 4 zugeführte Fasermaterial 6 kann dann beispielsweise auf einem nicht dargestellten Werkzeug abgelegt werden.

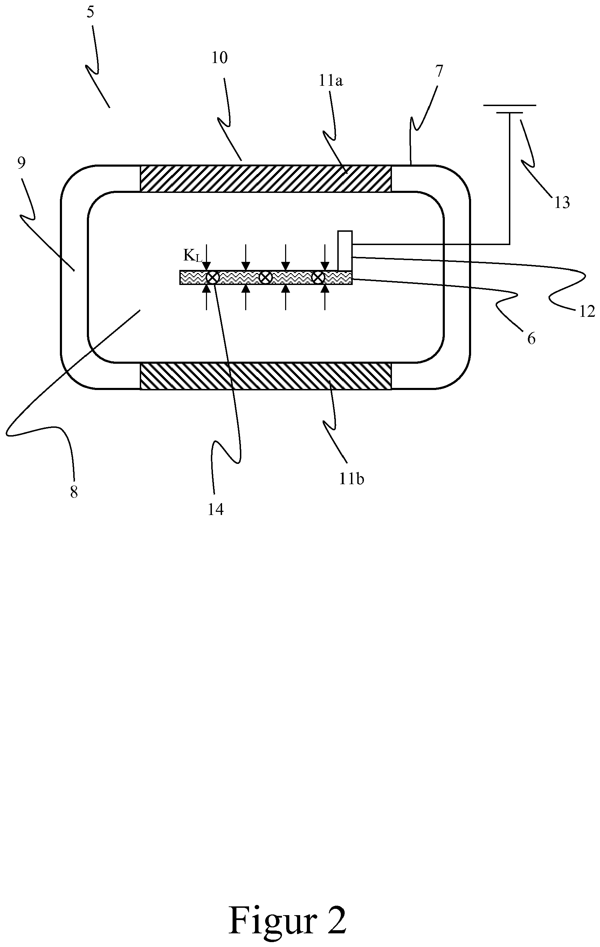

Figur 2 zeigt einen Querschnitt durch die erfindungsgemäße Faserzuführvorrichtung 5. Die Faserzuführvorrichtung 5 weist ein schlauchförmiges Faserleitungssystem mit mindestens einer dargestellten Faserleitung 7 auf, die im Inneren hohl ausgeführt ist. In diesem hohl ausgeführten Innendurchgang 8 kann das Faserendlosmaterial 6 von dem Fasermaterialvorratsspeicher 2 zu dem Ablegekopf 4 transportiert werden. Die Faserleitung 7 kann dabei jeden beliebigen Querschnitt aufweisen und muss nicht zwingend kreisförmig sein. Im schematisch dargestellten Ausführungsbeispiel der Figur 2 ist die Faserleitung 7 im Querschnitt im Wesentlichen rechteckig ausgeführt, um flächige Fasermaterialien 6 durch den Innendurchgang 8 transportieren zu können.

In dem Mantel 9 der Faserleitung 7 ist des Weiteren eine Magnetvorrichtung 10 vorgesehen, die an zwei gegenüberliegenden Seiten des Mantels 9 jeweils einen Magneten 11a und 11b aufweist. Die Magneten 11a und 11b erzeugen dabei ein Magnetfeld im Inneren der Faserleitung 7, genauer in dem Innendurchgang 8 der Faserleitung 7, sodass das Fasermaterial 6 durch das durch die Magneten 11a und 11b erzeugte Magnetfeld hindurch gefördert werden.

Über eine elektrische Kontakteinrichtung 12 ist das Faserendlosmaterial 6 mit einer Energiequelle 13 elektrisch gekoppelt, sodass ein Stromfluss 14 in dem Faserendlosmaterial 6 bewirkt werden kann. Der Stromfluss wird dabei derart bewirkt, dass die Richtung des Stromflusses im Wesentlichen parallel zur Förderrichtung bzw. im Wesentlichen entlang der Faserleitung 7 bewirkt wird. Figur 2 zeigt schematisch einen Querschnitt durch die Faserleitung 7, sodass die Förderrichtung aus der dargestellten Ebene heraus definiert ist.

Mit anderen Worten, der Stromfluss wird ausgehend von dem Fasermaterialvorratsspeicher 2 in Richtung Faserablegekopf 4 oder andersherum bewirkt, und zwar entlang der Faserleitung 7.

Wird nun ein Stromfluss in dem Fasermaterial 6 bewirkt, während es durch die Faserleitung 7 bzw. dem Innendurchgang 8 gefördert wird, so wirkt das stromdurchflossene Faserendlosmaterial 6 mit dem erzeugten Magnetfeld derart zusammen, dass eine Kraft, genau die Lorentzkraft, K_{L} auf das Fasermaterial 6 wirkt. Durch Anordnung der Magnete 11a, 11b sowie der Ausrichtung des Magnetfeldes und der Feldstärke kann so erreicht werden, dass das Fasermaterial 6 während der Förderung durch den Innendurchgang 8 der Faserleitung 7 im Wesentlichen mittig in Bezug auf den Querschnitt der Faserleitung 7 gehalten wird.

Wie im Ausführungsbeispiel der Figur 2 gezeigt, sind die Magnete 11a und 11b an jeweils gegenüberliegenden Seiten des Mantels 9 angeordnet, sodass eine Kraft entsprechend auf das Fasermaterial 6 so wirkt, dass das Fasermaterial 6 von der Innenwand des Mantels 9 weggedrückt wird und so im Wesentlichen mittig gehalten wird. Hierdurch kann erreicht werden, dass das Fasermaterial 6 im Wesentlichen berührungslos durch den Innendurchgang der Faserleitung 7 gefördert wird. Kommt es aufgrund von großen Krümmungsradien dennoch zu Berührungen an der Innenwand des Mantels 9, so kann aufgrund der auf das Fasermaterial 6 wirkenden Kraft die Reibung an den Berührungspunkten reduziert werden. Hierdurch können Faserschädigungen des Fasermaterials 6 vermieden werden.

### Bezugszeichenliste:

- 1: Faserlegevorrichtung
- 2: Fasermaterialvorratsspeicher
- 3: Roboter
- 4: Ablegekopf
- 5: Faserzuführvorrichtung
- 6: Faserendlosmaterial
- 7: Faserleitung
- 8: Innendurchgang
- 9: Mantel der Faserleitung
- 10: Magnetvorrichtung
- 11a, 11b: Magnete
- 12: elektrische Kontakteinrichtung
- 13: Energiequelle
- 14: Stromfluss
- K_{L}: Lorentzkraft

## Patentansprüche

1. Faserzuführvorrichtung (5) zum Zuführen von Faserendlosmaterial (6) von einem Fasermaterialvorratsspeicher (2) zu einer von dem Fasermaterialvorratsspeicher (2) entfernt im Raum befindlichen Verarbeitungseinheit (4), wobei das Faserendlosmaterial (6) ein zumindest teilweise elektrisch leitfähiges Material enthält, mit
- einem schlauchförmigen Faserleitungssystem, das zumindest eine Faserleitung (7) aufweist, die einen Innendurchgang (8) zur Aufnahme des Faserendlosmaterial (6) aufweist, um das Faserendlosmaterial (6) von dem Fasermaterialvorratsspeicher (2) zu der Verarbeitungseinheit (4) in einer Förderrichtung zu befördern,
wobei
- eine elektrische Kontakteinrichtung (12) vorgesehen ist, die zum Kontaktieren des Faserendlosmaterials (6) mit einer elektrischen Energiequelle (13) derart ausgebildet ist, dass ein Stromfluss (14) in dem Faserendlosmaterial (6) im Wesentlichen parallel zu der Förderrichtung bewirkt wird, wenn das Faserendlosmaterial (6) im Innendurchgang (8) der Faserleitung (7) befördert wird, und
- eine Magnetvorrichtung (10) vorgesehen ist, die zum Erzeugen eines Magnetfeldes in dem Innendurchgang (8) der Faserleitung (7) ausgebildet ist, wobei das stromdurchflossene Faserendlosmaterial (6) mit dem Magnetfeld derart zusammenwirkt, dass eine Kraft (K_{L}) auf das Faserendlosmaterial (6) im Innendurchgang (8) der Faserleitung (7) während der Förderung so wirkt, dass das in dem Innendurchgang der Faserleitung befindliche Faserendlosmaterial von den Innenwänden der Faserleitung weggedrückt wird.

2. Faserzuführvorrichtung (5) nach Anspruch 1, **dadurch gekennzeichnet, dass** die Magnetvorrichtung (10) einen oder mehrere Magnete (11a, 11b) aufweist, die in oder an der Faserleitung (7) angeordnet sind.

3. Faserzuführvorrichtung (5) nach Anspruch 1 oder 2, **dadurch gekennzeichnet, dass** die Faserzuführvorrichtung (5) derart ausgebildet ist, dass durch das Zusammenwirken des stromdurchflossenen Faserendlosmaterials (6) mit dem Magnetfeld die auf das Faserendlosmaterial wirkende Kraft (K_{L}) ein berührungsloses Fördern des Faserendlosmaterials in dem Innendurchgang der Faserleitung (7) bewirkt.

4. Faserzuführvorrichtung (5) nach einem der vorhergehenden Ansprüche, **dadurch gekennzeichnet, dass** die Faserzuführvorrichtung derart ausgebildet ist, dass durch das Zusammenwirken des stromdurchflossenen Faserendlosmaterials mit dem Magnetfeld die auf das Faserendlosmaterial wirkende Kraft in eine Richtung entgegengesetzt zumindest einer Innenwand des Innendurchgangs der Faserleitung (7) wirkt.

5. Faserzuführvorrichtung (5) nach einem der vorhergehenden Ansprüche, **dadurch gekennzeichnet, dass** die Faserleitung eine flexible Faserleitung ist.

6. Faserlegevorrichtung (1) zum Legen von Fasermaterial (6) auf einem Werkzeug zur Herstellung eines Faserverbundbauteils mit einem Fasermaterialvorratspeicher (2), einem Roboter (3) und einem an dem Roboter (3) zur freien Bewegung angeordneten Faserlegekopf (4) zum Legen des Fasermaterial (6), wobei zwischen dem Fasermaterialvorratsspeicher (2) und dem Faserlegekopf (4) eine Faserzuführvorrichtung (5) nach einem der vorhergehenden Ansprüche zum Zuführen des Fasermaterials von dem Fasermaterialvorratsspeicher zu dem Faserlegekopf vorgesehen ist.

## Claims

1. Fibre feeding device (5) for feeding endless fibre material (6) from a fibre-material store (2) to a processing unit (4) located spatially away from the fibre-material store (2), wherein the endless fibre material (6) contains an at least partially electrically conductive material, having
- a tubular fibre-line system, which has at least one fibre line (7) which has an internal passage (8) for receiving the endless fibre material (6), in order to convey the endless fibre material (6) from the fibre-material store (2) to the processing unit (4) in a conveying direction,
wherein
- an electrical contact device (12) is provided, which is configured to put the endless fibre material (6) into contact with an electrical energy source (13) such that a current flow (14) in the endless fibre material (6) is brought about substantially parallel to the conveying direction when the endless fibre material (6) is conveyed in the internal passage (8) of the fibre line (7), and
- a magnet device (10) is provided, which is configured to generate a magnetic field in the internal passage (8) of the fibre line (7), wherein the endless fibre material (6) through which current flows interacts with the magnetic field such that a force (K_{L}) acts on the endless fibre material (6) in the internal passage (8) of the fibre line (7) during conveying such that the endless fibre material located in the fibre line is pushed away from the internal walls of the fibre line.

2. Fibre feeding device (5) according to Claim 1, **characterized in that** the magnet device (10) has one or more magnets (11a, 11b), which are arranged in or on the fibre line (7).

3. Fibre feeding device (5) according to Claim 1 or 2, **characterized in that** the fibre feeding device (5) is configured such that, as a result of the interaction of the endless fibre material (6) through which current flows with the magnetic field, the force (K_{L}) acting on the endless fibre material causes the endless fibre material to be conveyed in a contactless manner in the internal passage of the fibre line (7).

4. Fibre feeding device (5) according to one of the preceding claims, **characterized in that** the fibre feeding device is configured such that, as a result of the interaction of the endless fibre material through which current flows with the magnetic field, the force acting on the endless fibre material acts in a direction opposite to at least one internal wall of the internal passage of the fibre line (7).

5. Fibre feeding device (5) according to one of the preceding claims, **characterized in that** the fibre line is a flexible fibre line.

6. Fibre laying device (1) for laying fibre material (6) on a mould for producing a fibre composite component, having a fibre-material store (2), a robot (3), and a fibre-laying head (4), arranged on the robot (3) so as to move freely, for laying the fibre material (6), wherein, between the fibre-material store (2) and the fibre-laying head (4), a fibre feeding device (5) according to one of the preceding claims for feeding the fibre material from the fibre-material store to the fibre laying head is provided.

## Revendications

1. Dispositif d'alimentation en fibres (5) pour la fourniture de matériau en fibre sans fin (6) à partir d'un accumulateur de matériau en fibre (2) à une unité de traitement (4) se trouvant spatialement à distance de l'accumulateur de matériau en fibre (2), dans lequel le matériau en fibre sans fin (6) contient un matériau au moins en partie électriquement conducteur, avec
- un système de guidage de fibre en forme de tuyau flexible, qui présente au moins un guide-fibre (7), qui présente un passage intérieur (8) destiné à recevoir le matériau en fibre sans fin (6), afin de transporter le matériau en fibre sans fin (6) depuis l'accumulateur de matériau en fibre (2) jusqu'à l'unité de traitement (4) dans une direction de transport,
dans lequel
- il est prévu un dispositif de contact électrique (12), qui est conçu pour la mise en contact du matériau en fibre sans fin (6) avec une source d'énergie électrique (13), de telle manière qu'un flux de courant (14) soit créé dans le matériau en fibre sans fin (6) essentiellement parallèlement à la direction de transport, lorsque le matériau en fibre sans fin (6) est transporté dans le passage intérieur (8) du guide-fibre (7), et
- il est prévu un dispositif magnétique (10), qui est conçu pour la production d'un champ magnétique, dans lequel le matériau en fibre sans fin (6) parcouru par un courant coopère avec le champ magnétique, de telle manière qu'une force (K_{L}) agisse sur le matériau en fibre sans fin (6) dans le passage intérieur (8) du guide-fibre (7) pendant le transport, de telle manière que le matériau en fibre sans fin (6) se trouvant dans le passage intérieur du guide-fibre soit écarté des parois intérieures du guide-fibre.

2. Dispositif d'alimentation en fibres (5) selon la revendication 1, **caractérisé en ce que** le dispositif magnétique (10) présente un ou plusieurs aimant(s) (11a, 11b), qui est/sont disposé(s) dans ou sur le guide-fibre (7).

3. Dispositif d'alimentation en fibres (5) selon la revendication 1 ou 2, **caractérisé en ce que** le dispositif d'alimentation en fibres (5) est conçu de telle manière que, par la coopération du matériau en fibre sans fin (6) parcouru par un courant avec le champ magnétique, la force (K_{L}) agissant sur le matériau en fibre sans fin provoque un transport sans contact du matériau en fibre sans fin dans le passage intérieur du guide-fibre (7).

4. Dispositif d'alimentation en fibres (5) selon l'une quelconque des revendications précédentes, **caractérisé en ce que** le dispositif d'alimentation en fibres est conçu de telle manière que, par la coopération du matériau en fibre sans fin parcouru par un courant avec le champ magnétique, la force agissant sur le matériau en fibre sans fin agisse dans une direction opposée à au moins une paroi intérieure du passage intérieur du guide-fibre (7).

5. Dispositif d'alimentation en fibres (5) selon l'une quelconque des revendications précédentes, **caractérisé en ce que** le guide-fibre est un guide-fibre flexible.

6. Dispositif de pose de fibre (1) pour la pose de matériau en fibre (6) sur un outil destiné à la fabrication d'une pièce composite en fibres, avec un accumulateur de matériau en fibre (2), un robot (3) et une tête de pose de fibre (4) disposée sur le robot (3) pour son mouvement libre pour la pose du matériau en fibre (6), dans lequel il est prévu entre l'accumulateur de matériau en fibre (2) et la tête de pose de fibre (4) un dispositif d'alimentation en fibres (5) selon l'une quelconque des revendications précédentes pour la fourniture du matériau en fibre à partir de l'accumulateur de matériau en fibre jusqu'à la tête de pose de fibre.
